# EUROPEAN PATENT APPLICATION

(11) **EP 1 561 957 A2**
(43) Date of publication of application: **10.08.2005**
(21) Application number: 05250547.6
(22) Date of filing: 01.02.2005
(51) Int. Cl.: F16B 37/08

(54) **Split nut**

(30) Priority: 03.02.2004 GB 0402274
(71) Applicant: Delaware Capital Formation, Inc., Wilmington, Delaware 19803-2755 (US)
(72) Inventor: McIntyre, Gary, Tamworth, Staffordshire B77 3BY (GB); Richardson, Martin Edward George, Erdington, Birmingham B24 0PD (GB)
(74) Representative: Carpenter, David

(57) **Abstract**

A split nut assembly for use in hydraulic tensioning of bolts and studs comprising, first and second nut halves (11, 12), guide means (14, 15) for guiding movement of the nut halves relative to one another between a closed position in which the nut halves define a screw-threaded bore (13) in use receiving the shank of a bolt to be tensioned, and an open position in which the nut halves are spaced from one another to allow the nut to be moved axially relative to a bolt shank in use, resilient means (18) urging the nut halves to their open position, and an over-centre type linkage (21, 22) pivotally connected at its opposite ends to the nut halves respectively, said linkage comprising a first link (21) pivotally connected to said first nut half for movement about a pivot axis (23), and a second link (22) pivotally connected to said second nut half for movement about a second pivot axis (24), said first and second links being pivotally interconnected for movement about a third pivot axis (25) parallel to and spaced from said first and second pivot axes, said linkage having a rest position in which the nut halves are in their open position and an operative position in which said nut halves are in their closed position and said first, second and third pivot axes are substantially co-planar with said third axis disposed between said first and second axes so that the linkage resists movement of the nut halves from their closed position.

## Description

### Technical Field

This invention relates to a split nut assembly for use in hydraulic bolt and stud tensioning.

For convenience, throughout the remainder of this Application, reference will be made to "bolt tensioning". It is to be recognised however that the term "bolt" is intended to include within it also non-headed, threaded components such as elongate studs.

### Background Art

Hydraulic bolt tensioning generally involves the application of hydraulic loading to a component in screw-threaded engagement with the shank of the bolt, to tension the bolt. The component which is assembled in screw-threaded engagement with the bolt to be tensioned is conventionally referred to as a nut even though it is not necessarily the nut which, in use, maintains tension in the bolt. Bolt tensioning may be undertaken in hostile environments, for example by divers working sub-sea, in low visibility conditions, wearing a protective suit including gloves. The bolts to be tensioned may be of substantial diameter, and in order to facilitate assembly of the nut to the bolt for tensioning purposes it has previously been proposed, for example in our European Patent EP0922527 B1, to provide a nut split into two parts which are opened away from one another for easy assembly over the shank of the bolt to be tensioned, and which can then be closed to lock in screw-threaded engagement with the bolt for the application of tension to the bolt.

The arrangement illustrated in European Patent EP0922527 B1 incorporates resilient means urging two halves of the split nut away from one another, and a locking mechanism involving the use of L-shaped slots for retaining the two halves of the split nut engaged with the shank of the bolt to be tightened. After pressing the two nut halves towards one another against the action of the resilient means urging them apart, it is necessary for the operator to rotate the nut relative to an associated cam ring in order to lock the nut halves around the bolt shank prior to applying tensioning force. It is an object of the present invention to provide a split nut which is an improvement on the mechanical arrangement of the split nut of our Patent EP0922527 B1.

### Disclosure of Invention

In accordance with the present invention there is provided a split nut comprising first and second nut halves, guide means for guiding movement of the nut halves relative to one another between a closed position in which the nut halves define a screw-threaded bore in use receiving the shank of a bolt to be tensioned, and an open position in which the nut halves are spaced from one another to allow the nut to be moved axially relative to a bolt shank in use, resilient means urging the nut halves to their open position, and an overcentre-type linkage pivotally connected at its opposite ends to the nut halves respectively, said linkage comprising a first link pivotally connected to said first nut half for movement about a pivot axis, and a second link pivotally connected to said second nut half for movement about a second pivot axis, said first and second links being pivotally interconnected for movement about a third pivot axis parallel to and spaced from said first and second pivot axes, said linkage having a rest position in which the nut halves are in their open position and an operative position in which said nut halves are in their closed position and said first, second and third pivot axes are substantially co-planar with said third axis disposed between said first and second axes so that the linkage resists movement of the nut halves from their closed position.

Preferably said first link includes a pair of parallel link members spaced on opposite sides of the central screw-threaded aperture of the split nut and each pivotally connected at one end to the first nut half for movement relative thereto about said first pivot axis which is disposed parallel to a diametric plane of the nut.

Preferably said second link abuts said second nut half in the operative position of the linkage.

Desirably said linkage is such that said first and second pivot axes are disposed in a common diametric plane of the nut, and said third axis lies above said plane during closing movement of the nut halves, and lies in or fractionally below said plane in the nut closed position.

Preferably said guide means includes abutment means limiting movement of the nut halves away from one another to define the open position of the nut.

Conveniently in the open position of the nut said second link is disposed generally parallel to the longitudinal axis of the nut and a guard is provided upstanding from the second nut half to prevent an operator's hand becoming trapped between the second link and the shank of a bolt extending through the nut in use, as the nut is opened.

Desirably one axial end face of the nut halves are shaped, so that in the closed position of the nut, they define a frustum of a cone, said frusto-conical surface of the nut coacting, during tensioning, with a component having a corresponding frusto-conical recess driven against the nut by the tensioning force, to urge the nut halves towards one another to grip the threaded shank extending therebetween in use.

Preferably said axial end of the nut halves is so shaped as to define an axially extending, cylindrical, spigot protruding from the apical end of the frusto-conical surface, said spigot being arranged to be received within a central cylindrical recess of the component having the frusto-conical recess therein, to lock the nut halves in their closed position during tensioning.

### Brief Description of the Drawings

One example of the present invention is illustrated in the accompanying drawings wherein:-
Figure 1 is a diagrammatic prospective view of a split nut in its closed position;
Figure 2 is a side elevational view of the nut of Figure 1 (to a reduced scale);
Figure 3 is a view similar to Figure 1 of the nut partway between an open position and a closed position;
Figure 4 is a side elevational view of the nut of Figure 3;
Figure 5 is a view similar to Figures 1 and 3 of the nut in its open position;
Figure 6 is a plan view of the nut of Figure 5;
Figure 7 is a side elevational view of the nut illustrated in Figures 5 and 6; and,
Figures 8 and 9 are sectional views on the lines A - A and B - B in Figure 6 respectively.

### Preferred modes of Carrying Out the Invention

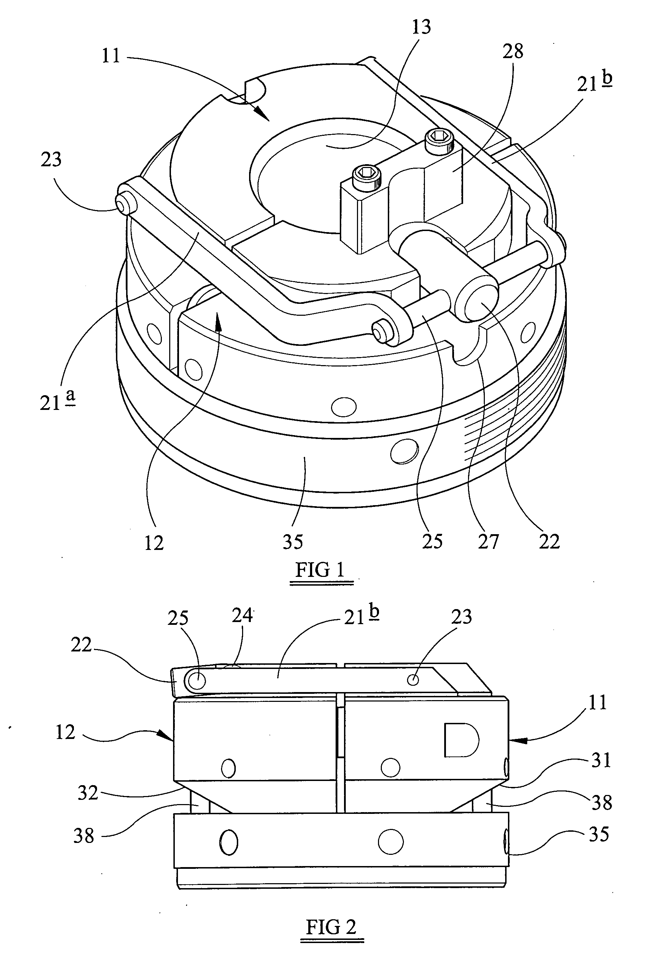

Referring to the drawings, it can be seen that the split nut comprises first and second cast or machined steel nut halves 11, 12 which, when closed together as shown in Figures 1 and 2, define a nut having extending axially there through a screw-threaded bore 13 within which the screw-threaded shank of a bolt or stud to be tensioned, is received in screw-threaded engagement.

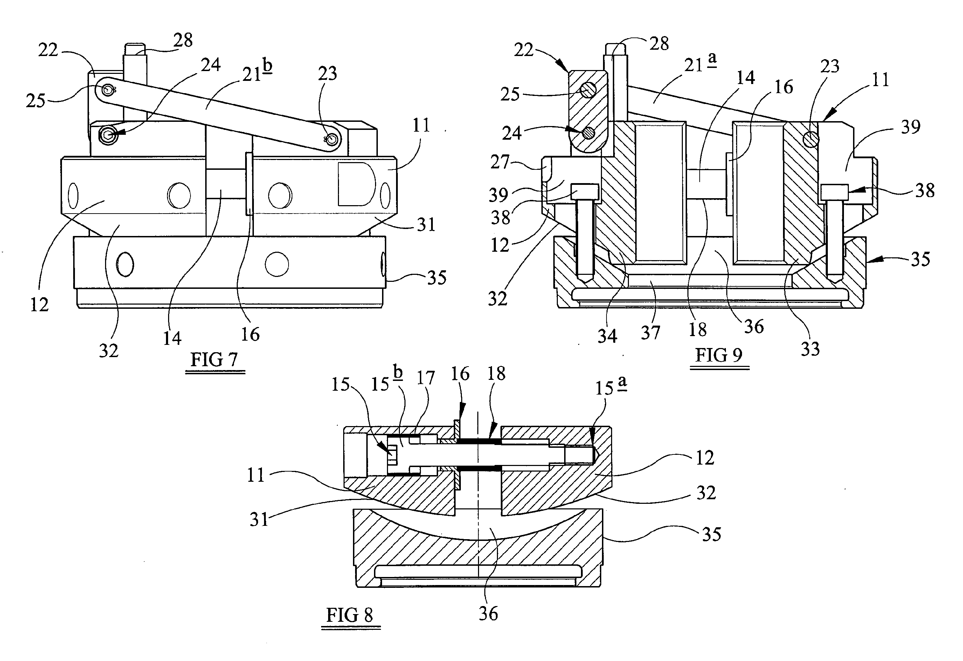

First and second cylindrical guide rods 14, 15 are disposed parallel to one another, in a diametric plane of the nut 11, 12 and extend on opposite sides of the central bore 13 of the nut. As is apparent from Figure 8 each of the guide rods 14, 15 includes an elongate cylindrical shank extending between the nut halves 11, 12, the shank being screw-threaded at one end (denoted by the suffix a) and received in screw-threaded engagement within the nut half 12. At its opposite end each of the cylindrical rods has an enlarged cylindrical head (indicated by the suffix b) slidably received in a corresponding bore in the nut half 11. The head of each guide rod 14, 15 can abut a shoulder within the nut half 11 to limit the amount by which the nut halves can move apart from one another. Thus abutment of the heads 14b, 15b with the internal abutments of the nut half 11 determines the open position of the split nut.

A low friction collar 16 having an integral washer, slidably receives the cylindrical shank of each of the rods 14, 15 and is received in the respective bore of the nut half 11 to constitute a sliding bearing between the nut half 11 and the guide rods 14, 15 respectively. If desired the head of each of the guide rods can carry a sleeve 17 of low-friction material to facilitate sliding of the heads 14b, 15b in the nut half 11. Interposed between the nut halves 11, 12 and encircling each of the guide rods is a respective helical compression spring 18 which likely urges the nut half 11 to slide on the guide rods relative to the nut half 12 so that the nut assumes its open position.

In use, an hydraulic tensioning piston and cylinder, assembly is fitted over the bolt to be tensioned, and then the split nut is fitted to the bolt shank. The split nut is positioned over the shank of the bolt with the nut in its open position, and the operator then pushes the two nut halves towards one another, against the action of the springs 18, to close the nut halves around the shank of the bolt and to engage the internal screw-thread on the two halves of the bore 13 with the corresponding screw-thread on the bolt shank.

In order to hold the two nut halves in their closed position, with their thread engaging the thread of the bolt, and prior to the application of hydraulic loading to tension the bolt, there is provided an overcentre-type linkage interconnecting the nut halves.

The overcentre-type linkage comprises a first link 21 pivoted to the first nut half 11, and a second link 22 pivoted to the second nut half 12, the first and second links 21, 22 being pivotally interconnected. More specifically, the link 21 comprises a pair of parallel link members 21a, 21b pivotally connected at one end to the nut half 11 by means of a transversely extending common pivot pin 23 defining a first pivot axis of the linkage. The link 22 is in the form of a short cylindrical rod intersected at one end by a second pivot pin 24 supported in the nut half 12. The second pivot pin 24 is parallel to the pivot pin 23 and defines a second pivot axis of the linkage, parallel to the first pivot axis.

The link members 21a, 21b are elongate, and extend across the upper faces (as shown in the drawings), of the nut halves 11, 12 on opposite sides of the screw-threaded bore 13 of the nut. At their ends remote from the pivot pin 23 the link members 21a, 21b are interconnected by a third pivot pin 25 which extends through the ends of the link members 21a, 21b and through the link 22 at a point spaced from the pivot pin 24. The pivot pin 25 is parallel to the pivot pins 23, 24 and defines the third pivot axis of the linkage, the third axis being parallel to the first and second pivot axes.

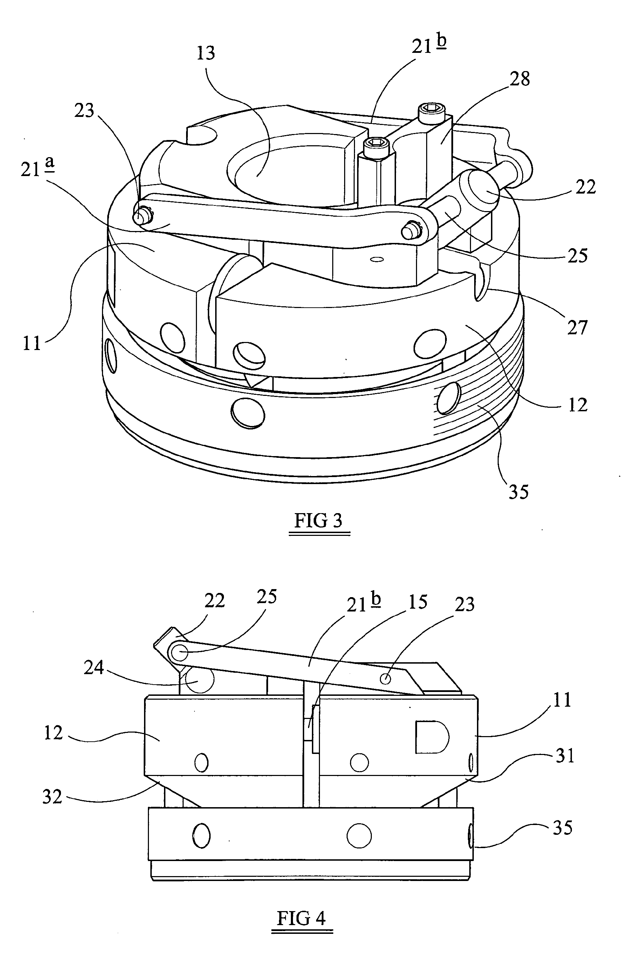

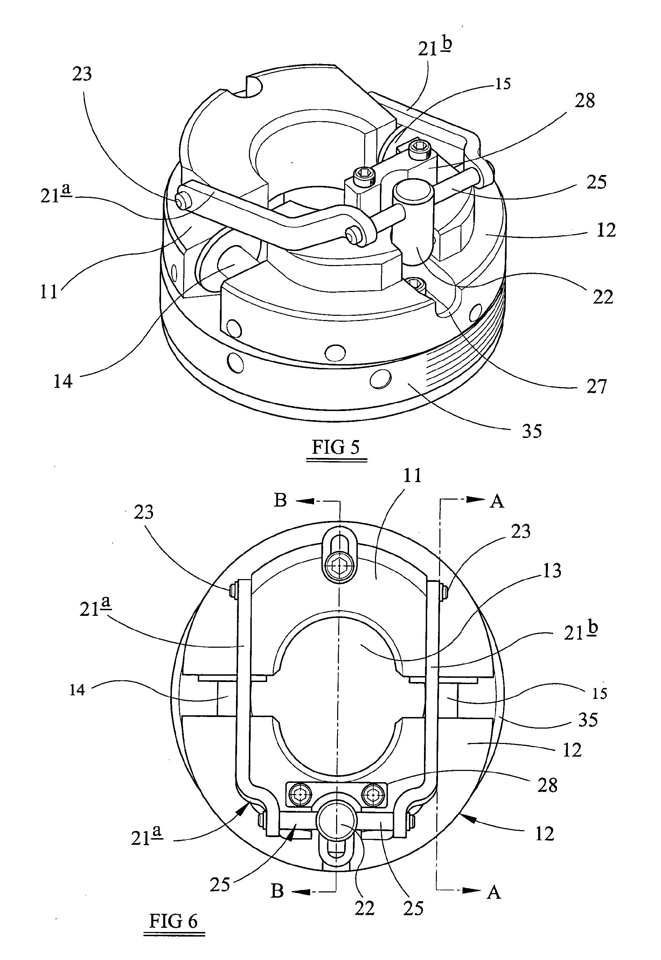

As is apparent from Figures 5, 6, 7, and 9, in the open position of the nut, the link 22 is disposed with its axis parallel to the longitudinal axis of the nut, and the second and third pivot axes lie in a plane parallel to a plane containing the longitudinal axis of the nut. Furthermore, the link members 21a, 21b are inclined upwardly away from the upper surfaces of the nut halves. As an operator presses the nut halves towards one another the link 21 starts to pivot downwardly towards the upper face of the nut, and the link 22 starts to swing about the second pivot axis, as can be seen in Figures 3 and 4.

As the nut halves 11, 12 reach their closed position the link 21 is parallel with the upper faces of the nut halves, and the link 22 has moved through about 90° to lie in a recess 27 in the upper face of the nut half 12. In this position the first, second and third pivot axes lie in a common plane extending diametrically with respect to the nut, with the pivot pin 24 disposed between the pivot pins 23 and 25. Thus the "line of force" of the springs 18 attempting to drive the nut halves to their open position is directly along the aligned longitudinal axes of the links 21, 22 and the nut halves cannot move towards their open position unless the alignment of the linkage 21, 22 is disturbed in a manner to move the second pivot axis (the axis of the pivot pin 25) upwardly out of the plane containing the three axes. It will be recognised that the pivot pin cannot move downwardly to displace the second pivot axis below the plane of the axes since it abuts the surface of the recess 27. If desired, it can be arranged that the closed position of the nut corresponds to the second pivot axis having just passed through the plane containing the first and third pivot axes so that the linkage has moved fractionally over-centre. It is however believed that the linkage achieving a position in which the three pivot axes are co-planar is sufficient to hold the nut in its closed position during normal use. As will become apparent hereinafter, it is not necessary for the linkage to be the sole retaining means holding the nut in its closed position during the application of tension to the associated bolt.

It will be understood that there is no intention that any part of the linkage 21, 22 shall be used as a lever to close the nut halves from their open position to their closed position. Closure of the nut halves is achieved by pressing the nut halves towards one another, and this is an extremely simple exercise for an operator, even if working sub-sea in zero visibility and wearing protective gloves. The movement of the linkage to the position in which it holds the nut halves in their closed position is automatic as the nut halves are pressed towards one another. The orientation of the nut is not of relevance, and reference herein to the "upper" surface of the nut halves is of significance only in relation to the accompanying drawings. In practice is it probable that the operator will press the two halves together, and as the link 22 achieves its seating in the recess 27 the operator will press down on the link 22 with the palm of one hand thus ensuring that the linkage has reached the position in which it latches the nut halves together.

When releasing the linkage, after tensioning, to allow the nut halves to move apart the operator will press upwardly on the outer end of the link 22 and the pivot pin 25 together with the end regions of the link members 21a, 21b. It will be recognised that at this stage no significant force is necessary to move the linkage since the springs 18 do not exert a great amount of restoring force. However the force exerted by the springs is sufficient to move the nut halves apart, moving the linkage back to the position shown in Figure 1, once the linkage has moved to displace the axis of the pivot pin 25 above the plane of the axes of the pivot pins 23 and 24.

Conveniently but not essentially there is provided a guard member 28 upstanding from the upper face of the nut half 12, adjacent the root of the link 22, (the guard member being omitted for clarity from Figures 2 and 4) which prevents the operator trapping a glove, or part of a hand, between the link 22 and the screw-threaded shank of the bolt extending through the central bore 13 of the nut, as the nut is opened.

It is apparent from the drawings that the nut halves, when moved to a closed position, define a generally cylindrical body. The cylindrical body has the screw-threaded bore 13 extending there through, and the axial end face of the body remote from the linkage 21, 22 is of frusto-conical form, the two nut halves having part conical surfaces 31, 32 which, in the closed position of the nut halves, define a frustum of a cone. Furthermore, at the apical end of the cone the nut halves 11, 12 are extended to define halves of a substantially cylindrical integral spigot 33, 34 having its axis co-extensive with the axis of the conical frustum and the nut itself.

The drawings show a cam ring 35 associated with the nut 11, 12. The cam ring 35 is positioned coaxial with the nut 11, 12, and the face of the ring 35 presented to the lower axial end of the nut, is formed with a frusto-conical recess 36 the cone angle of which corresponds to the cone angle of the frusto-conical surface 31, 32 of the nut. Furthermore, the central aperture of the ring 35 at the apical end of the frusto-conical recess 36 defines a cylindrical bore 37 the diameter of which corresponds to the diameter of the spigot 33, 34 at the apical end of the frusto-conical surface 31, 32 of the nut.

In use when the nut has been moved to its closed position around the screw-threaded shank of a bolt to be tensioned, and the thread of the nut has meshed with the thread of the bolt shank, tensioning load to tension the bolt is applied to the bolt through the nut by means of an hydraulic piston and cylinder arrangement interposed between the nut and a fixed abutment from which the bolt shank protrudes. Generally the piston and cylinder arrangement is an annular arrangement through which the shank of the bolt extends. The piston and cylinder arrangement seats on the fixed abutment surface from which the bolt shank protrudes, and the cam ring 35 is interposed between the nut and the piston and cylinder arrangement.

In practice, the piston and cylinder arrangement is positioned over the shank of the bolt and the nut, in its open condition, is then passed over the shank of the bolt and, with the cam ring 35 interposed between the nut and the piston and cylinder arrangement, the nut is closed around the shank of the bolt, the linkage 21, 22 latching the nut halves in their closed position. The operator then manually rotates the closed nut on the shank to screw the nut axially into engagement with the cam ring 35 until the spigot 33, 34 of the nut enters the cylindrical bore 37 of the cam ring, the frusto-conical surface 31, 32 of the nut seating in the frusto-conical recess 36 of the cam ring.

Hydraulic fluid under pressure is then admitted to the piston and cylinder arrangement to extend the piston and cylinder arrangement thus driving the cam ring 35 against the nut 11, 12. As this interaction of the cam ring 35 and the nut occurs the frusto-conical surface 31, 32 of the nut coacts with the surface of the frusto-conical recess 36 to force the nut halves 11, 12 towards one another to firmly grip the bolt shank. The manual winding of the nut into engagement with cam ring before hydraulic fluid is admitted the piston and cylinder ensures that the nut is correctly engaged with the thread of the shank and also ensures that substantially the whole of stroke of the piston is a working stroke when the piston and cylinder is pressurised.

Continued application of fluid pressure to the piston and cylinder arrangement to further extend the piston and cylinder arrangement drives the cam ring 35 and the nut 11, 12 axially relative to the fixed abutment, tensioning the bolt shank. In the event that the bolt shank is being tensioned to release an existing conventional nut threaded onto the bolt shank and engaging the abutment surface from which the bolt shank protrudes, then after tensioning the nut will no longer be engaging the abutment surface, and can be unscrewed partway along the shank of the bolt by manipulating the nut through apertures in a lower support component of the piston and cylinder arrangement in known manner. Similarly, if the bolt is being tensioned to allow a particular tension to remain in the bolt after a conventional nut has been tightened then the process described above is reversed screwing the conventional nut down onto the abutment surface before pressure in the piston and cylinder arrangement is released. This operation is conventional and will be well understood by those skilled in the art. It will be recognised that after the piston and cylinder arrangement has been de-pressurised, it is necessary manually to wind the nut up the thread of the shank to extract the nut spigot from the bore of the cam ring before the linkage can be released to open the nut for removal from the shank of the bolt.

In the embodiment illustrated in the drawings the cam ring 35 is formed as a separate component and is carried by the nut 11, 12 through the intermediary of cap screws 38 passing slidably through radially elongate slots 39 in the nut halves 11, 12 and screw-threaded into engagement in corresponding bores in the cam ring 35. It will be recognised that the cap screws 38 do not impede movement of the nut halves between their open and closed positions, and do not impede movement of the nut halves relative to the cam ring 35. The cap screws 38 simply serve to secure the cam ring 35 to the nut halves against loss, and facilitate handling of the nut and the cam ring as a single assembly by an operator.

In some embodiments it is preferred that the cam ring 35 is formed as an integral part of the piston and cylinder arrangement which is interposed between the nut and the fixed abutment, or is fixed to the outer end of the piston, and so does not form part of the split nut assembly for handling purposes.

In the embodiment described above the linkage is not designed to be used as a lever to close the nut. Particularly in sub-sea operation there is a danger that closing the nut on the shank using the linkage as a lever could damage the threads if they happen to meet crest to crest. However there may be applications where this disadvantage is minimal for example by virtue of robust thread forms and/or high visibility, and where the environment is hostile to human operators. In such situations it may be advantageous to use the linkage to close the nut, particularly if operation of the nut is to be automated. Thus for some applications the link 22 may be extended beyond the pivot pin 25 and/or shaped to accommodate an appliance for moving the link 22 to operate the linkage to close the nut.

## Claims

1. A split nut assembly for use in hydraulic tensioning of bolts and studs comprising, first and second nut halves (11, 12), guide means (14, 15) for guiding movement of the nut halves relative to one another between a closed position in which the nut halves define a screw-threaded bore (13) in use receiving the shank of a bolt to be tensioned, and an open position in which the nut halves are spaced from one another to allow the nut to be moved axially relative to a bolt shank in use, resilient means (18) urging the nut halves to their open position, and **characterised by** an over-centre type linkage (21, 22) pivotally connected at its opposite ends to the nut halves respectively, said linkage comprising a first link (21) pivotally connected to said first nut half for movement about a pivot axis (23), and a second link (22) pivotally connected to said second nut half for movement about a second pivot axis (24), said first and second links being pivotally interconnected for movement about a third pivot axis (25) parallel to and spaced from said first and second pivot axes, said linkage having a rest position in which the nut halves are in their open position and an operative position in which said nut halves are in their closed position and said first, second and third pivot axes are substantially co-planar with said third axis disposed between said first and second axes so that the linkage resists movement of the nut halves from their closed position.

2. A split nut assembly as claimed in claim 1 wherein said first link (21) includes a pair of parallel link members (21a, 21b) spaced on opposite sides of the central screw-threaded aperture of the split nut and each pivotally connected at one end to the first nut half for movement relative thereto about said first pivot axis which is disposed parallel to a diametric plane of the nut.

3. A split nut assembly as claimed in claim 1 wherein said second link abuts said second nut half in the operative position of the linkage.

4. A split nut assembly as claimed in claim 1 wherein said linkage is such that said first and second pivot axes are disposed in a common diametric plane of the nut, and said third axis lies above said plane during closing movement of the nut halves, and lies in or fractionally below said plane in the nut closed position.

5. A split nut assembly as claimed in claim 1 wherein said guide means (14, 15) includes abutment means (14b, 15b) limiting movement of the nut halves away from one another to define the open position of the nut.

6. A split nut assembly as claimed in claim 1 wherein in the open position of the nut said second link is disposed generally parallel to the longitudinal axis of the nut and a guard (28) is provided upstanding from the second nut half to prevent an operator's hand becoming trapped between the second link and the shank of a bolt extending through the nut in use, as the nut is opened.

7. A split nut assembly as claimed in any one of the preceding claims wherein one axial end face (31, 32) of each of the nut halves is shaped, so that in the closed position of the nut, they define a frustum of a cone, the frusto-conical surface of said frustum of the nut coacting, during tensioning, with a component (35) having a corresponding frusto-conical recess (36) in use driven against the nut by the tensioning force, to urge the nut halves towards one another to grip the threaded shank extending therebetween in use.

8. A split nut assembly as claimed in claim 7 wherein said axial end surfaces (31, 32) of the nut halves are so shaped as to define an axially extending, cylindrical, spigot (33, 34) protruding from the apical end of said frusto-conical surface of the nut, said spigot being arranged to be received within a central cylindrical recess (37) of the component (35) having the frusto-conical recess therein, to lock the nut halves in their closed position during tensioning.
